# EUROPEAN PATENT APPLICATION

(11) **EP 4 761 302 A1**
(43) Date of publication of application: **17.06.2026**
(21) Application number: 25217186.3
(22) Date of filing: 20.11.2025
(51) Int. Cl.: H04W 4/40

(54) **METHOD FOR INITIATING A TRANSMISSION OF A MESSAGE REPRESENTING A STATUS OF A RADIO NODE OF A WIRELESS COMMUNICATION NETWORK**

(30) Priority: 16.12.2024 DE 102024137992
(71) Applicant: Robert Bosch GmbH, 70442 Stuttgart (DE)
(72) Inventor: Ostendorf, Nico, 30519 Hannover (DE)

(57) **Abstract**

A method (100) for initiating a transmission of a message (M2) representing a status of a radio node (14) of a wireless communication network (10), wherein the wireless communication network (10) comprises a first radio node (12) and a second radio node (14) and the method comprises:
- Receiving, by the second radio node (14), a message (M1) representing a status of the first radio node (12);
- Upon reception of the message (M1), determining, by the second radio node (14), a redundancy measure based on
∘ the status of the first radio node (12) and
∘ a status of the second radio node (14) at a current point in time;

- Based on a result of the determining, storing, by the second radio node (14), the status of the first radio node (12) in a first data storage and the status of the second radio node (14) in a second data storage;
- Checking, by the second radio node (14), a fulfillment of a message generation policy based on
∘ a status of the second radio node (14) at a further current point in time,
∘ the status stored in the first data storage, and
∘ the status stored in the second data storage;

- Based on a result of the checking, initiating, by the second radio node (14), a transmission of a message (M2) representing the status of the second radio node (14) at the further current point in time.

## Description

### State of the art

In the field of Vehicle-to-X (V2X) communications, several methods have been developed to alleviate the current channel load caused by Vulnerable Road Users (VRUs). One such technique is Redundancy Mitigation (RM), as described in ETSI TS 103 300-3 V2.2.1. RM aims to strike a balance between the frequency of Vulnerable Road User Awareness Message (VAM) generation at the facilities layer and the communication overhead at the access layer, while ensuring the safety and awareness of VRUs in the vicinity. Specifically, VAM transmission at a VAM generation event is subject to various redundancy mitigation techniques, including the condition that an originating VRU ITS-S shall skip transmitting an individual VAM if specific criteria related to time elapsed, distance, speed, and orientation are simultaneously satisfied. These criteria are designed to optimize the transmission of VAMs without compromising VRU safety and awareness.

The procedure outlined in ETSI TS 103 300-3 V2.2.1 instructs the comparison of VAMs with the ego status to eliminate redundancy, but it lacks clarity regarding which VAMs should be utilized for comparison. The absence of a rule dictating the permissible age of a message for use in redundancy checks leads to issues, particularly when comparing the ego status with older messages.

### Disclosure of the invention

According to a first aspect, there is provided a method for initiating a transmission of a message representing a status of a radio node of a wireless communication network. Here, the wireless communication network comprises at least a first radio node and a second radio node.

The method according to the first aspect comprises:
- Receiving by the second radio node, a message representing a status of the first radio node;
- Upon reception of the message, determining, by the second radio node, a redundancy measure based on
   o the status of the first radio node and
   o a status of the second radio node at a current point in time;
- Based on a result of the determining, storing, by the second radio node, the status of the first radio node in a first data storage and the status of the second radio node in a second data storage;
- Checking, by the second radio node, a fulfillment of a message generation policy based on
   o a status of the second radio node at a further current point in time,
   o the status stored in the first data storage, and
   o the status stored in the second data storage;
- Based on a result of the checking, initiating, by the second radio node, a transmission of a message representing the status of the second radio node at the further current point in time.

According to a second aspect, there is provided a radio node of a wireless communication network configured to perform the steps method according to the first aspect, or its embodiments. The radio node may be configured as or comprised by a station of an intelligent transport system (ITS). The first and the second radio node are preferably comprised by different stations of the ITS.

According to a third aspect, there is provided a road user comprising the radio node according to the second aspect, or its embodiments. A road user may be a mobile or stationary road user. The road user can be selected from group comprising at least cars, trucks, motorcycles, bicycles, pedestrians, roadside infrastructure equipment including road signs, traffic lights or barriers and gates.

According to a fourth aspect, there is provided a computer program comprising instructions which, when the program is executed by the radio node according to the second aspect, cause the radio node to carry out the steps of the method according to the first aspect, or its embodiments.

According to a fifth aspect, there is provided a preferably non-transitory computer-readable data carrier having stored thereon the computer program as defined by the fourth aspect.

The message representing the status of the first radio node and/or the message representing the status of the second radio node may be V2X messages, e.g., collective perception messages (CPM), preferably cooperative awareness message, e.g., VAMs. The message may comprise one or multiple containers containing specific status information for representing the status of the respective radio node. In other words, the message contains an information about the status of the respective radio node.

The status information may indicate at least one of a group comprising: a position, a speed, a heading, other dynamic information of the respective radio node. Additionally or alternatively, the status information may indicate at least one of a group comprising: a type, a size, a path history, a path prediction of a road user that comprises the respective radio node. Preferably, the message represents the status of the radio node by comprising a status information on the position, the speed and the heading of the respective radio node. Here, a status of a radio node may be considered as a status of a station comprising the radio node, and/or of a road user comprising the radio node or the station with the radio node.

The message may be received and/or transmitted using a wireless communication channel of the wireless communication network, specifically a direct communication channel between the first and the second radio node. The message(s) may be transmitted as broadcast messages.

The redundancy measure can be understood as a representation of a level of redundancy or a metric specifying an extent of redundancy. The redundancy measure may comprise one or multiple redundancy indicators for representing the level of redundancy.

The redundancy measure is determined or calculated upon reception of the message, especially independent from the checking of the fulfillment of the message generation policy and further independent from the initiating of the transmission of the second message. In other words, the reception of the message representing the status of the first radio node constitutes a trigger for determining the redundancy measure.

The redundancy measure may be determined by comparing the status of the first radio node and the status of the second radio node at the current point in time. Here, the current point in time refers to a status information of the second radio node available at the second radio node when determining the redundancy measure.

Determining the redundancy measure may comprise at least one of, preferably all of:
- Determining a time elapsed since the last time a message representing a status of the second radio node was transmitted by the second radio node;
- Determining a distance between the first radio node and the second radio node based on a position of the first radio node as represented by the received message and a position of the second radio node at the current point in time;
- Determining a difference in speed between the first radio node and the second radio node based on a speed of the first radio node as represented by the received message and a speed of the second radio node at the current point in time;
- Determining a difference in heading between the first radio node and the second radio node based on a heading of the first radio node as represented by the received message and a heading of the second radio node at the current point in time.

Preferably, the determining of the redundancy measure follows the specification in ETSI TS 103 300-3.

According to an embodiment, the status of the first radio node and/or the at least one, preferably the plurality of, further radio node(s) is stored in the first data storage only if the determined redundancy measure(s) fulfil(s) a defined redundancy criterion. In other words, the determined redundancy measure may be compared with a defined redundancy criterion or threshold. More specifically, at least one of, preferably all of the elapsed time, the distance, the difference in speed, the difference in heading is/are compared with a respective redundancy criterion or threshold.

In case the determined redundancy measure fulfills the criterion, e.g., is below the respective threshold, preferably for each of the elapsed time, the distance, the difference in speed, the difference in heading, the status of the second radio node may be considered to be redundant with respect to the status of the first radio node. In case the determined redundancy measure does not fulfill the criterion, e.g., is equal or above the respective threshold for at least one of the elapsed time, the distance, the difference in speed, the difference in heading, the status of the second radio node may be considered not to be redundant with respect to the status of the first radio node. Consequently, the result of the determining may be that the status of the second radio node is considered either to be or not to be redundant with respect to the status of the first radio node.

Preferably, the status of the first radio node is stored in the first data storage (only) in case the result of the determining indicates that the status of the second radio node is redundant with respect to the status of the first radio node. The status of the second radio node is preferably stored in the second data storage (only) in case the result of the determining indicates that the status of the second radio node is redundant with respect to the status of the first radio node. Additionally, the status of the second radio node may be stored in the second data storage in case a message representing the status of the second radio node is transmitted, by the second radio node. For both cases, preferably, an already stored status of the second radio node is replaced by the respective status to be stored in the second data storage.

The status may be stored in the data storage by storing a status information representing, indicating or characterizing the respective status. For instance, for storing the status of the first radio node, the received message may be stored in the first data storage.

The message generation policy may define one or multiple conditions for generating a message, preferably representing or indicating a status of a radio node, in the wireless communication network. The condition(s) for checking the message generation policy based on the status of the second radio node at the further current point in time and
- the status stored in the first data storage, and
- the status stored in the second data storage
may be selected respectively from a group comprising at least:
- A time elapsed since the last time a message representing a status of the second radio node was transmitted by the second radio node is greater or equal than a defined elapsed time threshold.
- A (absolute) difference between the current heading of the second radio node and the respective radio node's heading as comprised by the stored status is greater or equal than a defined minimum (absolute) heading difference.
- A (absolute) difference between the current speed of the second radio node and the respective radio node's speed as comprised by the stored status is greater or equal than a defined minimum (absolute) speed difference.
- A (absolute) distance between the current position of the second radio node and the respective radio node's position as comprised by the stored status is greater or equal than a defined minimum (absolute) distance.
- A (absolute) difference between the current trajectory interception probability of the second radio node and the respective radio node's trajectory interception probability as comprised by the stored status is greater or equal than a defined minimum (absolute) difference.
- A decision of a road user comprising one of the radio nodes to join or leave a cluster of road users.
- A detection of a road user, preferably a vehicle, with a distance equal or smaller to a defined minimum (absolute) lateral and/or longitudinal and/or vertical distance to a road user, preferably a vehicle, comprising the second radio node.

The further current point in time preferably refers to the time of receiving the message and/or of determining the redundancy measure. The further current point in time preferably refers to the time of checking the fulfillment of the message generation policy. Consequently, the further current point in time is a time point later than the current point in time.

The message generation policy may be based on or following the specification in ETSI TS 103 300-3. Preferably, the fulfillment of the message generation policy is checked based on the status of the second radio node at the further current point in time with respect to each of
- all status stored in the first data storage, and
- the preferably last or most recently stored status stored in the second data storage.

Initiating the transmission of the message may comprise generating the message and/or selecting radio resources of the wireless communication network for the transmission and/or transmitting the (generating) message, preferably using the selected radio resources.

The proposed solution aims to enhance the effectiveness of mitigating redundancy in transmitting status messages within a wireless communication network. By determining the redundancy measure upon message reception, it ensures that only current information is utilized for checking and mitigating redundancy of status information. This leads to a further reduction in channel congestion in the network, particularly in a network with a plurality of wireless devices, such as an intelligent transport system with multiple vehicles and vulnerable road users. Simultaneously, it enhances the safety of vulnerable road users by avoiding the use of outdated status information for redundancy determination and ensuring that non-redundant up-to-date status information is indeed transmitted.

In a wireless communication network, e.g., an intelligent transportation system, with a multitude of radio node, e.g., comprised by road users, utilizing received redundant information for subsequent message generation checks ensures that currently not transmitting radio nodes are within a defined spatial proximity with at least one transmitting radio node because the currently not transmitting radio nodes refrain from transmitting due to the similarity or redundancy of their status with the one of the transmitting radio node.

According to an embodiment, the wireless communication network comprises at least one, preferably a plurality of, further first radio node(s) and the method further comprises performing, for each of the at least one, preferably the plurality of, further first radio node(s), steps of
- Receiving, by the second radio node, a further message representing a status of the respective further first radio node;
- Upon reception of the further message, determining, by the second radio node, a redundancy measure based on
   o the status of the respective further first radio node time and
   o a status of the second radio node at a corresponding further current point in time;
- Based on a result of the determining, storing, by the second radio node, the status of the respective further first radio node in the first data storage and the status of the second radio node at the corresponding further current point in time in the second data storage.

The further first radio node(s) may be arranged or assigned to road user(s) different from the road user comprising the first radio node and the road user comprising the second radio node. In other words, multiple further messages may be received from the plurality of further first radio nodes, wherein, based on the result of the determining, the status of the respective further first radio nodes are stored in the same first data storage. Preferably, when receiving multiple messages from the same radio node, older status information stored in the first data storage are replaced by younger status information for the same radio node. It is further preferred to replace an already stored status of the second radio node each time a current status of the second radio node is to be stored in the second data storage.

According to an embodiment,
- the first data storage contains a set, preferably a list, representing, based on a result of the determining, the status of the first radio node and the at least one, preferably the plurality of, further first radio nodes, and
- the set is generated, by the second radio node, by performing the steps of receiving, determining and storing the status of the respective (further) first radio node in the first data storage.

Here, the set of redundant status information for the plurality of (further) first radio nodes is generated as a basis for the checking of the fulfillment of the message generation policy. The set may also be empty in case the determined redundancy measure(s) indicates that no redundant status information have been received by the second radio node. Notably, the set contains redundant status information for which the redundancy was determined upon reception of the respective message, thus avoiding redundancy mitigation based on outdated status information.

According to an embodiment, the fulfillment of the message generation policy is checked based on
- a first comparison between
   o the status of the second radio node at the further current point in time and
   o the status of the second radio node most recently stored in the second data storage, and
- a second comparison between
   o the status of the second radio node at the further current point in time and
   o preferably the list of, the status of the first radio node and/or of the, preferably plurality of, further radio node(s) stored in the first data storage.

In other words, the, preferably all, stored status are compared with the status of the second radio node at the further current point in time. Specifically, the second comparison may consist of a plurality of second comparisons depending on the number of stored status in the first data storage. This allows to take into account all redundant status information in the first data storage for optimization redundancy mitigation in the network.

According to an embodiment, the transmission of the message is initiated independent from the first comparison if the second comparison indicates that the message generation policy is fulfilled, particularly if for each of the plurality of second comparisons the message generation policy is fulfilled. This ensures the transmission of potentially relevant status information in the network.

According to an embodiment, the transmission of the message is initiated if
- the second comparison indicates that the message generation policy is not fulfilled, and
- the first comparison indicates that the message generation policy is fulfilled.

Specifically, if for at least one of the plurality of second comparisons the message generation policy is not fulfilled, the transmission is still initiated in case the first comparison indicates that the message generation policy is fulfilled. This ensures that significant changes in the ego status of the second radio node are communicated in the network.

According to an embodiment, the transmission of the message is initiated if
- the first data storage does not contain a status of the first radio node and/or of the, preferably plurality of, further first radio node(s), and
- the first comparison indicates that the message generation policy is fulfilled.

Specifically, in case the first data storage is empty, the transmission is initiated in case the first comparison indicates that the message generation policy is fulfilled. This ensures the transmission of potentially relevant status information in the network in case no redundant status information is received.

According to an embodiment, the stored status of the first radio node is deleted from the first data storage based on a result of the checking, specifically wherein the respective stored status of the (further) first radio node(s) is/are deleted for which the second comparison indicates that the message generation policy is fulfilled. This ensure that status information is used only once as a basis for deciding to initiate the transmission of the second message.

According to an embodiment, the method further comprises:
- Based on a result of the checking, storing the status of the second radio node at the further current point in time in the second data storage.

Preferably, the stored status of the second radio node at the current point in time is replaced by the status of the second radio node at the further current point in time. In other words, the second data storage preferably comprises only the last or most recently stored status of the second radio node. This optimizes storage resources.

According to a further aspect of the invention, there is provided a wireless communication network comprising at least the second radio node according to the second aspect and one or multiple first radio nodes. The wireless communication network may be configured as an intelligent transport system and the radio nodes may be arranged on different road users of the intelligent transport system.

The non-transitory computer-readable data carrier is preferably configured to store the computer program to be executed by a processor of the radio node. The non-transitory computer readable data carrier include RAM, ROM, EEPROM, and any other non-volatile storage device.

### Description of the figures

Exemplary embodiments of the present invention are depicted in the figures, which are not to be construed as limiting the claims, and are explained in greater detail below.
- Fig. 1: schematically illustrates a wireless communication network according to an embodiment of the invention; and
- Fig. 2: schematically illustrates a method according to an embodiment of the invention.

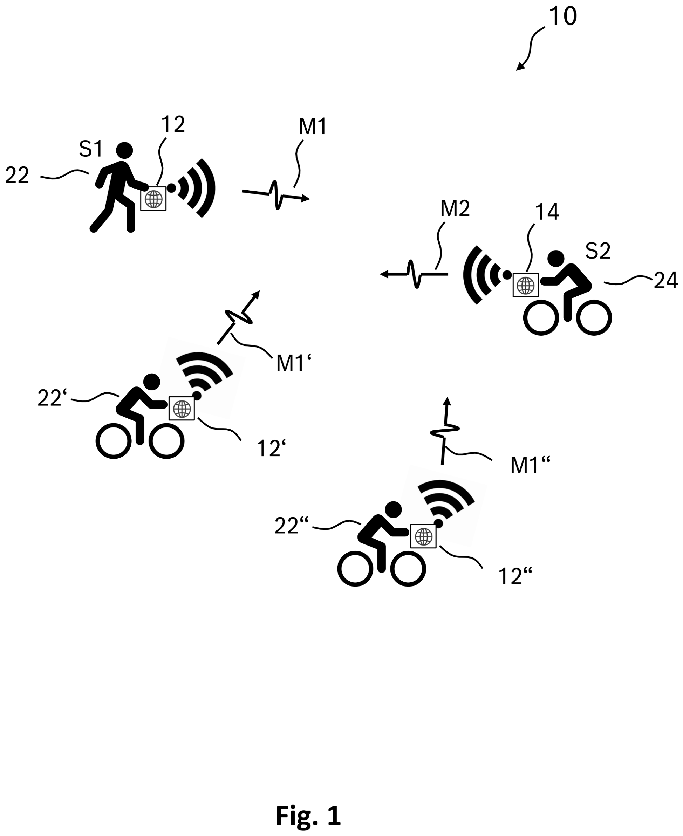

Fig. 1 schematically illustrates a wireless communication network 10. The wireless communication network 10 is configured as a Vehicle to Everything (V2X) network 10. The V2X network 10 may be part of an Intelligent Transport System (ITS).

The network 10 comprises a first radio node 12 arranged on or held by a first road user 22 and a second radio node 14 arranged on a second road user 24. The network 10 comprises a plurality of further first radio nodes 12', 12" arranged on further first road users 22', 22". The radio nodes 12, 12', 12", 14 may be configured as ITS stations 12, 12', 12", 14.

According to this embodiment, the first road user 22 is a pedestrian 22, the further first radio users 22', 22" are bicyclists 22', 22", and the second road user 24 is a bicyclist 24. In other words, the road users 22, 22', 22', 24 are so-called Vulnerable Road Users (VRUs).

For increasing road safety and traffic efficiency the network 10 may be configured to enable cooperative awareness between the road users 22, 22', 22', 24, specifically by regular exchange of information, e.g., regarding each other's position, dynamics and attributes, among the road users 22, 22', 22', 24 in the network 10. In particular, awareness messages M1, M1', M1", M2 may be exchanged between the road users 22, 22', 22', 24 on a regular or continuous basis. The awareness messages M1, M1', M1", M2 may be transmitted as broadcast messages M1, M1', M1", M2 in the network 10, e.g., by using a (preferably direct) wireless communication channel between the road users 22, 22', 22', 24, e.g., based on IEEE specification like ITS-G5 or Dedicated Short Range Communication (DSRC), or based on 3GPP specifications like cellular V2X.

The radio nodes 12, 12', 12", 14 may be configured to transmit the respective awareness message M1, M1', M1", M2 at intervals specified by a minimum value, e.g., 100 ms, and a maximum value, e.g., 5.000 ms. Particularly, a time between two consecutive messages transmitted by the same radio node 12, 12', 12", 14 may depend on a message generation policy comprising preferably a plurality of message generation conditions.

In addition to accounting for the message generation policy, the radio nodes 12, 12', 12", 14 may be configured to determine a redundancy measure for mitigating the transmission of redundant status information in the network 10, thus avoiding the congestion of the network 10.

More precisely, the first radio node 12 is configured to transmit the message M1 representing a status of the first radio node 12. The status of the first radio node 12 may comprise at least one, preferably all, of a position, a speed, a heading of the first radio node 12. The second radio node 14 is configured to receive the message M1 transmitted by the first radio node 12.

For avoiding using outdated status information for redundancy mitigation, the second radio node 14 is further configured to determine, upon reception of the message M1, a redundancy measure. The redundancy measure is determined based on the status of the first radio node 12 as represented by the message M1 and a status of the second radio node 14 at a current point in time, e.g., at the point in time of receiving the message M1 and/or determining the redundancy measure. The status of the second radio node 14 may comprise at least one, preferably all, of a position, a speed, a heading of the second radio node 14.

Preferably, for determining the redundancy measure, the second radio node 14 is configured
- to determine a time elapsed since the last time a message representing a status of the second radio node 14 was transmitted by the second radio node 14, and/or
- to determine a distance between the first radio node 12 and the second radio node 14 based on a position of the first radio node 12 as represented by the received message M1 and a position of the second radio node 14 at the current point in time, and/or
- to determine a difference in speed between the first radio node 12 and the second radio node 14 based on a speed of the first radio node 12 as represented by the received message M1 and a speed of the second radio node 14 at the current point in time, and/or
- to determine a difference in heading between the first radio node 12 and the second radio node 14 based on a heading of the first radio node 12 as represented by the received message M1 and a heading of the second radio node 14 at the current point in time.

Moreover, for determining the redundancy measure, the second radio node 14 is configured to compare at least one of, preferably all of the elapsed time, the distance, the difference in speed, the difference in heading with a respective threshold. In case the determined redundancy measure is below the respective threshold, preferably for each of the elapsed time, the distance, the difference in speed, the difference in heading, the status of the second radio node 14 is defined to be redundant with respect to the status of the first radio node 12. In case the determined redundancy measure is equal or above the respective threshold for at least one of the elapsed time, the distance, the difference in speed, the difference in heading, the status of the second radio node 14 is defined not to be redundant with respect to the status of the first radio node 12.

The second radio node 14 is further configured to store, based on a result of the determining, specifically (only) in case the status of the second radio node 14 is determined to be redundant with respect to the status of the first radio node 12, the status of the first radio node 12 in a first data storage and the status of the second radio node 14 in a second data storage.

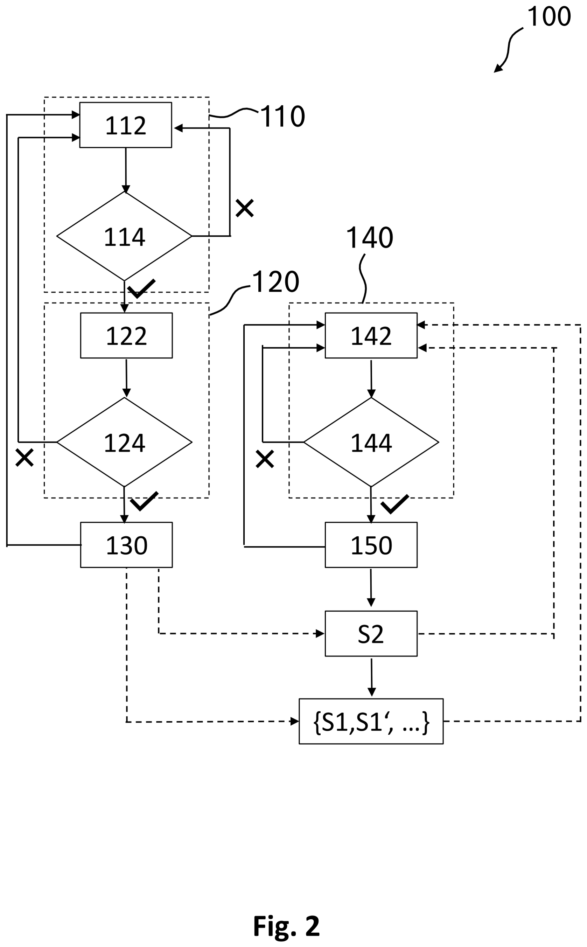

Furthermore, the second radio node 14 is configured to check a fulfillment of a message generation policy based on
- a status of the second radio node 14 at a further current point in time,
- the (one or multiple) status stored in the first data storage, and
- the status stored in the second data storage,
as further illustrated in Fig. 2.

Additionally, the second radio node 14 is configured to initiate, based on a result of the checking, specifically (only) in case the message generation policy is fulfilled, a transmission of the message M2 representing the status of the second radio node 14 at the further current point in time.

In other words, it is proposed to check the redundancy of the ego status of the second radio node 12 and the received status message M1 at the moment of reception and to utilize the received redundant information for subsequent message generation checks. The primary benefit is the utilization of only current information, as opposed to potentially using outdated and invalid information. This approach also enhances the similarity between two objects identified as redundant compared to the procedure outlined in ETSI TS 103 300-3 V2.2.1.

Fig. 2 schematically illustrates a method 100 for initiating a transmission of a message representing a status of a radio node of a wireless communication network according to an embodiment of the invention. The wireless communication network may be the network 10 according to Fig. 1.

The method 100 comprises a step 110 of receiving, by the second radio node 14, a message representing a status S1 of the first radio node 12. Receiving 110 the message may comprise listening 112, by the second radio node 14, to transmissions in the network 10 and checking 114 whether the message was successfully received.

The method 100 comprises a step 120 of, upon reception of the message, determining, by the second radio node 14, a redundancy measure based on
- the status S1 of the first radio node 12 and
- a status S2 of the second radio node 14 at a current point in time.

Determining 120 the redundancy measure may comprise calculating 122 one or multiple redundancy measures according to redundancy mitigation rules based on the status S1 of the first radio node 12 and the status S2 of the second radio node 14 at the current point in time and determining 124, based on the calculating 122, specifically by comparing the one or multiple redundancy criteria with respective redundancy criteria, whether the status S2 of the second radio node 14 is redundant to the status S1 of the first radio node 12.

The method 100 comprises a step 130 of, based on a result of the determining 120, storing, by the second radio node 14, the status S1 of the first radio node 12 in a first data storage and the status S2 of the second radio node 14 in a second data storage. In analogy, the status S1' of a further first radio node 12' is stored in the first data storage resulting in a set of status information {S1, S1', ...} stored in the first data storage.

The method 100 comprises a step 140 of, checking, by the second radio node 14, a fulfillment of a message generation policy based on
- a status of the second radio node 14 at a further current point in time,
- the status {S1, S2, ...} stored in the first data storage, and
- the status S2 stored in the second data storage.

Checking 140 the fulfillment of a message generation policy may comprise determining 142 one or multiple message generation indicators and comparing 144 the determined one or multiple message generation indicators with respective thresholds.

According to this embodiment, the fulfillment of the message generation policy is checked based on
- a first comparison between
   o the status of the second radio node 14 at the further current point in time and
   o the status of the second radio node 14 most recently stored in the second data storage, and
- a second comparison between
   o the status of the second radio node 14 at the further current point in time and
   o preferably the list of, the status of the first radio node 12 and/or of the, preferably plurality of, further radio node(s) 12', 12" stored in the first data storage.

In other words, one or multiple message generation indicators are determined based on the
- the status of the second radio node 14 at the further current point in time and
- the status of the second radio node 14 most recently stored in the second data storage.

Additionally, one or multiple message generation indicators are determined based on the
- the status of the second radio node 14 at the further current point in time and
- preferably the list of, the status of the first radio node 12 and/or of the, preferably plurality of, further radio node(s) 12', 12" stored in the first data storage.

Consequently, the fulfillment of the message generation policy is determined both with respect to the status of the second radio node 14 most recently stored in the second data storage and with respect to the status stored in the first data storage.

In case the first data storage does not contain a status of the first radio node 12and/or the, preferably plurality of, further first radio node(s) 12', 12", specifically in case the first data storage is empty, the transmission of the message is initiated if the first comparison indicates that the message generation policy is fulfilled. Here, performing the second comparison is obsolete.

In case the first data storage contains at least one status of the first radio node 12 and/or of the, preferably plurality of, further first radio node(s) 12, 12", the second comparison is performed. Here, in case the second comparison indicates that the message generation policy is not fulfilled, but the first comparison indicates that the message generation policy is fulfilled, the transmission of the message is initiated. In case the second comparison indicates that the message generation policy is fulfilled, the transmission of the message is initiated independent from the first comparison. Preferably, the respective stored status of the first radio node 12 and/or the (plurality of) further first radio node(s) 12', 12" is/are deleted from the first data storage for which the second comparison indicates that the message generation policy is fulfilled.

The method 100 comprises a step 150 of, based on a result of the checking 140, specifically when the message generation policy is fulfilled, initiating, by the second radio node 14, a transmission of a message M2 representing the status of the second radio node 14 at the further current point in time.

In other words, for the example of the network 10 with VRUs 12, 12', 12", 14 according to Fig. 1, once the ego VRU 14 receives a VAM M1, this ego VRU 14 immediately checks if the received VAM M1 is redundant to its current ego status S2. The redundancy mitigation check is preferably based on the rules and quantities as defined in ETSI TS 103 300-3 V2.2.1:
- The time elapsed since the last time VAM was transmitted by originating VRU ITS-S does not exceed a defined first quantity "numSkipVamsForRedundancyMitigation" (e.g. 4) times a defined second quantity "T_GenVamMax".
- The Euclidian absolute distance between the current estimated position of the reference point and the estimated position of the reference point in the received VAM from a peer ITS-S is less than defined third quantity "minReferencePointPositionChangeThreshold".
- The difference between the current estimated speed of the reference point and the estimated absolute speed of the reference point in received VAM from a peer ITS-S is less than a defined fourth quantity "minGroundSpeedChangeThreshold".
- The difference between the orientation of the vector of the current estimated ground velocity and the estimated orientation of the vector of the ground velocity of the reference point in the received VAM from a peer ITS-S is less than a defined fifth quantity
   "minGroundVelocityOrientationChangeThreshold".

If the received message M1 is not redundant, no action is taken. However, if the message M1 is redundant to the ego status S2, the ego VRU 24 safes its ego status as if it had sent an own VAM and also stores the received VAM in a list of redundant VAMs.

The ego VRU 24 checks if it fulfills the generation rules for sending a new individual VAM, based on the information from the last generated ego VAM. This information may be influenced by the mitigation process as explained before. In addition to check against the last ego VAM, the ego VRU 24 now compares its current status also against the received redundant VAMs as follows:
If the list of redundant VAMs is empty, no further check is necessary, and the decision to send a new VAM depends solely on the data from the last ego VAM.

If there is at least one redundant VAM in the redundant VAMs list, then a new check is done. The ego VRU 24 will check if the generation rules are met if it compares its current ego data with the data from the redundant VAMs. For example, a VRU needs to send a new VAM if it moved 4 meters. If the current position of the ego VRU 24 is 4 meters different compared to the position in the redundant VAM the generation rules are met compared to this message.

If now at least one redundant VAM in the list does not fulfill the generation rules, the ego VRU 24 will only send a new VAM if it meets the rules based on the last ego VAM information. In case, that all VAMs in the list fulfill the generation rules, the ego VRU 24 will send a new VAM in any case. Every redundant VAM which fulfills the generation rules, will be removed from the list.

## Claims

1. A method (100) for initiating a transmission of a message (M2) representing a status of a radio node (14) of a wireless communication network (10), wherein the wireless communication network (10) comprises a first radio node (12) and a second radio node (14) and the method (100) comprises:
- Receiving (110), by the second radio node (14), a message (M1) representing a status of the first radio node (12);
- Upon reception of the message (M1), determining (120), by the second radio node (14), a redundancy measure based on
o the status of the first radio node (12) and
o a status of the second radio node (14) at a current point in time;
- Based on a result of the determining (120), storing (130), by the second radio node (14), the status of the first radio node (12) in a first data storage and the status of the second radio node (14) in a second data storage;
- Checking (140), by the second radio node (14), a fulfillment of a message generation policy based on
o a status of the second radio node (14) at a further current point in time,
o the status stored in the first data storage, and
o the status stored in the second data storage;
- Based on a result of the checking (140), initiating (150), by the second radio node (14), a transmission of a message (M2) representing the status of the second radio node (14) at the further current point in time.

2. The method (100) according to claim 1, **characterized in that** the wireless communication network (10) comprises at least one, preferably a plurality of, further first radio node(s) (12', 12") and the method (100) further comprises performing, for each of the at least one, preferably the plurality of, further first radio node(s) (12', 12"), steps of
- Receiving, by the second radio node (14), a further message (M1', M1") representing a status of the respective further first radio node (12', 12");
- Upon reception of the further message (M1', M1"), determining, by the second radio node (14), a redundancy measure based on
o the status of the respective further first radio node (12', 12") and
o a status of the second radio node (14) at a corresponding further current point in time;
- Based on a result of the determining, storing, by the second radio node (14), the status of the respective further first radio node (12', 12") in the first data storage and the status of the second radio node (14) at the corresponding further current point in time in the second data storage.

3. The method (100) according to claim 2, **characterized in that**
- the first data storage contains a set, preferably a list, representing, based on a result of the determining, the status of the first radio node (12) and the at least one, preferably the plurality of, further first radio node(s) (12', 12"), and
- the set is generated, by the second radio node (14), by performing the steps of receiving, determining and storing the status of the respective (further) first radio node (12', 12") in the first data storage.

4. The method (100) according to one of the preceding claims, **characterized in that** the status of the first radio node (12) and/or the at least one, preferably the plurality of, further first radio node(s) (12', 12") is stored in the first data storage only if the determined redundancy measure(s) fulfil(s) a defined redundancy criterion.

5. The method (100) according to one of the preceding claims, **characterized in that** the fulfillment of the message generation policy is checked based on
- a first comparison between
o the status of the second radio node (14) at the further current point in time and
o the status of the second radio node (14) most recently stored in the second data storage, and
- a second comparison between
o the status of the second radio node (14) at the further current point in time and
o preferably the list of, the status of the first radio node (12) and/or of the, preferably plurality of, further radio node(s) (12', 12") stored in the first data storage.

6. The method (100) according to claim 5, **characterized in that** the transmission of the message (M2) is initiated independent from the first comparison if the second comparison indicates that the message generation policy is fulfilled.

7. The method (100) according to claim 5 or 6, **characterized in that** the transmission of the message (M2) is initiated if
- the second comparison indicates that the message generation policy is not fulfilled, and
- the first comparison indicates that the message generation policy is fulfilled.

8. The method (100) according to one of claims 5 to 7, **characterized in that** the transmission of the message (M2) is initiated if
- the first data storage does not contain a status of the first radio node (12) and/or of the, preferably plurality of, further first radio node(s) (12', 12"), and
- the first comparison indicates that the message generation policy is fulfilled.

9. The method (100) according to one of claims 5 to 8, **characterized in that** the stored status of the first radio node (12) is deleted from the first data storage based on a result of the checking, specifically wherein the respective stored status of the (further) first radio node(s) (12', 12") is/are deleted for which the second comparison indicates that the message (M) generation policy is fulfilled.

10. The method (100) according to one of the preceding claims, **characterized in that** the method (100) further comprises:
- Based on a result of the checking, storing the status of the second radio node (14) at the further current point in time in the second data storage.

11. A radio node (14) of a wireless communication network (10) configured to perform the steps of the method (100) according to one of the preceding claims.

12. A road user (24) comprising the radio node (14) according to claim 11.

13. A computer program comprising instructions which, when the program is executed the radio node (14) according to claim 11, cause the radio node (14) to carry out the steps of the method (100) of one of claims 1 to 10.

14. A computer-readable data carrier having stored thereon the computer program according to claim 13.
